# FASCICULE DE BREVET EUROPEEN

(11) **EP 1 883 545 B1**
(45) Date de publication et mention de la délivrance du brevet: **15.07.2009**
(21) Numéro de dépôt: 06763154.9
(22) Date de dépôt: 16.05.2006
(51) Int. Cl.: B60C 9/20

(54) **PNEUMATIQUES POUR DEUX ROUES**
REIFEN FÜR ZWEIRÄDRIGE FAHRZEUGE
TIRES FOR TWO-WHEELED VEHICLES

(30) Priorité: 18.05.2005 FR 0505058
(43) Date de publication de la demande: 06.02.2008
(73) Titulaire: Société de Technologie Michelin, 63000 Clermont-Ferrand (FR); Michelin Recherche et Technique S.A., 1763 Granges-Paccot (CH)
(72) Inventeur: VALLE, Alain, F-63118 Cebazat (FR); PROST, Pascal, F-63200 Riom (FR)
(74) Mandataire: Le Cam, Stéphane Georges Elie
(86) Numéro de dépôt international: PCT/EP2006/062334
(87) Numéro de publication internationale: WO 2006/122929

(56) Documents cités:
- EP-A- 0 425 155
- EP-A- 0 844 106
- EP-A- 1 097 824
- FR-A- 2 561 588
- US-A1- 2003 015 273
- US-A1- 2003 136 491

## Description

La présente invention concerne un pneumatique destiné à équiper un véhicule à deux roues tel qu'une motocyclette.

Bien que non limité à une telle application, l'invention sera plus particulièrement décrite en référence à un tel pneumatique de motocyclette, ou moto.

L'armature de renforcement ou renforcement des pneumatiques et notamment des pneumatiques de motocyclette est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisée pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base, tels que les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc, sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage», pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée au moins d'éléments de renforcement généralement textiles. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet d'éléments de renforcement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet peuvent être associées à au moins une couche d'éléments circonférentiels, généralement obtenus par enroulement hélicoïdal d'une bandelette d'au moins un élément de renforcement enrobé de caoutchouc.

Le brevet FR 2 561 588 décrit ainsi une telle armature de sommet, avec au moins une nappe dont les éléments de renforcement font avec la direction circonférentielle un angle pouvant varier entre 0° et 8°, le module d'élasticité de tels éléments s'élevant à au moins 6000 N/mm², et, disposée entre l'armature de carcasse et la nappe d'éléments circonférentiels, d'une couche d'amortissement formée principalement de deux nappes d'éléments croisés d'une nappe à la suivante en faisant entre eux des angles compris entre 60° et 90°, les dites nappes croisées étant formées d'éléments de renforcement textiles ayant un module d'élasticité d'au moins 6000 N/mm².

Le document EP 0 456 933, en vue de conférer à un pneumatique pour moto une excellente stabilité à grande vitesse ainsi qu'une excellente propriété de contact avec le sol, enseigne par exemple de constituer une armature de sommet avec au moins deux nappes : une première nappe, radialement la plus proche de l'armature de carcasse étant composée de câbles orientés avec un angle compris entre 40° et 90° par rapport à la direction circonférentielle et la deuxième nappe, la plus proche radialement de la bande de roulement étant composée de câbles enroulés hélicoïdalement dans la direction circonférentielle.

Le brevet US 5 301 730, en vue d'augmenter la motricité d'un pneumatique pour position arrière d'une moto, propose une armature de sommet composée, en allant de l'armature de carcasse radiale à la bande de roulement, d'au moins une nappe d'éléments sensiblement circonférentiels et de deux nappes d'éléments croisés d'une nappe à la suivante en faisant avec la direction circonférentielle un angle pouvant être compris entre 35° et 55°, la nappe d'éléments parallèles à la direction circonférentielle pouvant être formée d'éléments en polyamide aromatique, et les nappes d'éléments croisés en polyamide aliphatique.
Le brevet US 2003/0015273 montre un pneumatique correspondant au préambule de la revendication 1.

Les pneumatiques actuelles dont les éléments de renforcement des couches de travail présentent un angle non nul et le plus souvent compris entre 20 et 55° nécessitent l'utilisation d'éléments de renforcement textiles tels que des polyamides aromatiques ou des polyamides aliphatiques selon les rigidités requises.

Bien que moins intéressants que des éléments de renforcement métalliques notamment en termes de coûts lors de la fabrication, les éléments de renforcement textiles se sont imposés pour ces applications des couches de sommet de travail d'éléments de renforcement présentant des angles compris entre 20 et 55° pour les pneumatiques de motocyclette.

Ce choix technique s'explique par plusieurs raisons ; tout d'abord, les procédés de fabrication traditionnels qui consistent à mettre en place des éléments préfabriqués tels que des nappes ne sont pas compatibles avec la courbure d'un pneumatique de motocyclette dès lors que les éléments de renforcement des couches de travail présentant des angles non nuls sont métalliques. En effet, la rigidité des éléments préfabriqués comportant des éléments de renforcement métalliques rend la pose desdits éléments sur profil torique quasi-impossible et tout au moins impossible d'un point de vue industriel.

Ensuite, toujours du fait de la courbure très prononcée des pneumatiques de motocyclettes, les éléments de renforcement présentant des angles non nuls sont soumis à des cycles de compression et extension au niveau de l'aire de contact du fait de l'écrasement du pneumatique. Au cours de l'utilisation d'un pneumatique pour motocyclette, ces cycles de compression et extension conduisent à la rupture des éléments de renforcement en bord d'aire de contact si ceux-ci sont métalliques, lesdits cycles de compression et extension pénalisant fortement l'endurance de câbles métalliques.

Au sens de l'invention, la direction longitudinale du pneumatique, ou direction circonférentielle, est la direction correspondant à la périphérie du pneumatique et définie par la direction de roulement du pneumatique.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement.

La direction transversale ou axiale du pneumatique est parallèle à l'axe de rotation du pneumatique.

Un plan radial contient l'axe de rotation du pneumatique.

L'invention a pour but de réaliser des pneumatiques, notamment pour motocyclette, qui présentent des propriétés comparables à celles des pneumatiques actuels et réalisés à des coûts inférieurs.

Ce but a été atteint selon l'invention par un pneumatique pour un véhicule motorisé à deux roues, tel qu'une motocyclette, comportant au moins une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, et comportant sous la bande de roulement une structure de renforcement de sommet constituée d'au moins une couche d'éléments de renforcement, lesdits éléments de renforcement faisant un angle avec la direction circonférentielle compris entre 10 et 90° et étant des câbles métalliques présentant une courbe contrainte de traction en fonction de l'allongement relatif ayant des faibles pentes pour les faibles allongements et une pente sensiblement constante et forte pour les allongements supérieurs.

De tels câbles de renforcement de la nappe additionnelle sont habituellement dénommés câbles "bi-module".

L'invention concerne plus avantageusement des pneumatiques dans lesquels les éléments de renforcement de ladite couche font un angle avec la direction circonférentielle inférieur à 80° et de préférence encore inférieur à 60°.

Durant les études, il a été mis en évidence qu'un pneumatique pour motocyclette conforme à l'invention peut, contrairement à la connaissance de l'homme du métier, supporter les cycles de compression et d'extension apparaissant dans l'aire de contact en cours de roulage.

Les essais effectués avec des pneumatiques réalisés selon l'invention ont en effet montré que les pneumatiques présentent une endurance tout à fait satisfaisante et notamment ne présentent pas de faiblesse dans les zones habituelles du fait des cycles de compression et extension intervenant dans la zone de l'aire de contact.

Dans une variante avantageuse de l'invention, notamment pour optimiser les rigidités de la structure de renforcement le long du méridien du pneumatique, et en particulier aux bords des couches d'éléments de renforcement faisant un angle avec la direction circonférentielle compris entre 10 et 90°, les angles formés par lesdits câbles métalliques avec la direction longitudinale sont variables selon la direction transversale tels que lesdits angles sont supérieurs sur les bords axialement extérieurs des couches de câbles métalliques par rapport aux angles desdits tronçons mesurés au niveau du plan équatorial du pneumatique.

Un premier mode de réalisation de la variante de réalisation de l'invention selon laquelle les angles formés par lesdits câbles métalliques avec la direction longitudinale sont variables selon la direction transversale, consiste à faire varier l'angle des tronçons d'une manière monotone depuis le plan équatorial du pneumatique jusqu'aux bords de la couche d'éléments de renforcement.

Un second mode de réalisation de cette variante consiste à faire évoluer l'angle par palier depuis le plan équatorial du pneumatique jusqu'aux bords de la couche d'éléments de renforcement.

Un dernier mode de réalisation de cette variante consiste en une évolution de l'angle telle que des valeurs données soient obtenues pour des positions axiales données.

Ces différents modes de réalisation de la variante de réalisation de l'invention selon laquelle les angles formés par lesdits câbles métalliques avec la direction longitudinale sont variables selon la direction transversale permettent en d'autres termes, d'obtenir une forte rigidité circonférentielle de la structure de renforcement du sommet par la présence d'angles fermés, c'est-à-dire faibles, dans la zone du sommet du pneu, c'est-à-dire dans la zone encadrant le plan équatorial. Et au contraire la présence d'angles ouverts, c'est-à-dire d'angles tendant vers 90° peut être obtenue sur les bords de la couche d'éléments de renforcement ou plus exactement au niveau des épaules du pneumatique pour améliorer l'adhérence, la motricité, le confort, ou encore la température de fonctionnement du pneumatique ; en effet, de telles variations d'angles permettent de moduler les rigidités de cisaillement des couches d'éléments de renforcement.

Selon un mode de réalisation de l'invention plus particulièrement avantageux, les câbles métalliques, faisant un angle avec la direction circonférentielle compris entre 10 et 90°, présentent une aptitude à la pénétration comprise entre 80 et 100%.

L'aptitude à la pénétration selon l'invention est l'aptitude que présente la gomme à pénétrer les zones libres d'un câble, c'est-à-dire les zones ne comportant pas de matière ; elle est exprimée en pourcentage desdites zones libres occupées par de la gomme après cuisson et déterminée par un test de perméabilité à l'air.

Ce test de perméabilité à l'air permet de mesurer un indice relatif de perméabilité à l'air. Il constitue un moyen simple de mesure indirecte du taux de pénétration du câble par une composition de caoutchouc. Il est réalisé sur des câbles extraits directement, par décorticage, des nappes de caoutchouc vulcanisées qu'ils renforcent, donc pénétrés par le caoutchouc cuit.

Le test est réalisé sur une longueur de câble déterminée (par exemple 2 cm) de la manière suivante : on envoie de l'air à l'entrée du câble, sous une pression donnée (par exemple 1 bar), et on mesure la quantité d'air à la sortie, à l'aide d'un débitmètre ; pendant la mesure l'échantillon de câble est bloqué dans un joint étanche de telle manière que seule la quantité d'air traversant le câble d'une extrémité à l'autre, selon son axe longitudinal, est prise en compte par la mesure. Le débit mesuré est d'autant plus faible que le taux de pénétration du câble par le caoutchouc est élevé.

Il s'est avéré que la mise en place de câbles métalliques selon l'invention, dans les couches de l'armature du pneumatique comportant des éléments de renforcement faisant un angle avec la direction circonférentielle compris entre 10 et 90°, pénétrés par la gomme dans les conditions prévues ci-dessus autorisent une répartition des contraintes plus favorables entre les différents fils composant les câbles et donc une résistance encore meilleure aux cycles de compression et d'extension.

Un tel pneumatique selon l'invention sera avantageusement réalisé selon une technique sur noyau dur. D'une part, les câbles métalliques peuvent par exemple être mis en place selon la technique décrite dans le brevet EP 0 248 301 de manière précise en évitant les problèmes, évoqués précédemment, liés à la mise en place d'un élément préfabriqué sur le profil torique d'un pneumatique pour motocyclette. Par ailleurs, une technique de fabrication sur noyau dur peut être associée à des cuissons des pneumatiques réalisées sous haute pression, favorisant la pénétration des câbles métalliques par les mélanges de gomme.

Des éléments de renforcement plus particulièrement adaptés à la réalisation d'au moins une couche d'éléments de renforcement sont par exemple des assemblages de type câble à torons de formule 12.15, dont la construction est 4x3x0.15, quatre torons étant enroulés ensemble en hélice selon un pas de 4.6 mm, chacun des torons étant constitués de trois fils métalliques enroulés ensemble en hélice selon un pas de 3.1 mm, les fils de chaque torons et lesdits torons étant enroulés dans le même sens de torsion S/S ou Z/Z, et les 12 fils présentant un diamètre de 0.15 mm.

Un autre exemple de câble à torons adapté à la réalisation d'un pneumatique selon l'invention est un câble de formule 21.15, dont la construction est 3x7x0.15, trois torons étant enroulés ensemble en hélice selon un pas de 5.3 mm, chacun des torons étant constitués de sept fils métalliques enroulés ensemble en hélice selon un pas de 3.2 mm, les fils de chaque torons et lesdits torons étant enroulés dans le même sens de torsion S/S ou Z/Z, et les 21 fils présentant un diamètre de 0.15 mm.

Selon un mode de réalisation préféré de l'invention, la structure de renforcement de sommet comporte au moins deux couches d'éléments de renforcement, lesdits éléments de renforcement formant entre eux, d'une couche à la suivante, des angles compris entre 20 et 160° et de préférence entre 40 et 100°.

Avantageusement encore, la structure de renforcement de sommet comporte au moins une couche d'éléments de renforcement circonférentiels et les éléments de renforcement de la couche d'éléments de renforcement circonférentiels présentent avantageusement un module d'élasticité supérieur à 6000 N/mm².

Des éléments de renforcement de la couche d'éléments de renforcement circonférentiels peuvent être métalliques et/ou textiles et/ou en verre.

La présence d'une couche d'éléments de renforcement circonférentiels est notamment préférable pour la réalisation d'un pneumatique destiné à être utilisé à l'arrière d'une motocyclette.

Une réalisation avantageuse de l'invention prévoit que la couche d'éléments de renforcement circonférentiels est positionnée au moins partiellement radialement à l'extérieur d'une couche d'éléments de renforcement faisant un angle avec la direction circonférentielle compris entre 10 et 90°. Lorsque la couche d'éléments de renforcement circonférentiels est réalisée radialement à l'extérieur des couches d'éléments de renforcement faisant un angle avec la direction circonférentielle compris entre 10 et 90° et placée directement sous la bande de roulement, elle peut notamment contribuer à l'amélioration de la stabilité à haute vitesse.

La couche d'éléments de renforcement circonférentiels peut ainsi être réalisée directement sous la bande de roulement pour former outre sa fonction première une couche de protection de la carcasse et des autres couches de la structure de renforcement de sommet, contre des agressions mécaniques éventuelles.

La couche d'éléments de renforcement circonférentiels peut encore être réalisée entre les couches d'éléments de renforcement faisant un angle avec la direction circonférentielle compris entre 10 et 90°, notamment par souci économique, la quantité de matière et le temps de pose étant ainsi diminués.

Une autre réalisation avantageuse de l'invention prévoit que la couche d'éléments de renforcement circonférentiels est positionnée au moins partiellement radialement à l'intérieur de la couche d'éléments de renforcement faisant un angle avec la direction circonférentielle compris entre 10 et 90° radialement la plus à l'intérieure. Selon cette réalisation, la couche d'éléments de renforcement circonférentiels est réalisée radialement à l'intérieur des couches d'éléments de renforcement faisant un angle avec la direction circonférentielle compris entre 10 et 90° et peut notamment permettre d'améliorer l'adhérence et la motricité du pneumatique.

Une variante de l'invention prévoit qu'au moins une couche d'éléments de renforcement, telle qu'une couche de câbles métalliques faisant un angle avec la direction circonférentielle compris entre 10 et 90°, est positionnée au moins partiellement radialement à l'intérieur de la structure de renfort de type carcasse.

Une autre variante de l'invention prévoit qu'au moins une couche d'éléments de renforcement circonférentiels est positionnée au moins partiellement radialement à l'intérieur de la structure de renfort de type carcasse. Cette variante de réalisation peut encore reprendre les différents positionnements évoqués précédemment par rapport aux couches d'éléments de renforcement faisant un angle avec la direction circonférentielle compris entre 10 et 90°.

La carcasse peut ainsi couvrir la structure complète de renforcement de sommet.

De préférence, l'invention prévoit qu'au moins une couche de renforcement de sommet est mise en place entre la carcasse et la bande de roulement pour assurer une protection de la carcasse.

Il faut noter qu'un pneumatique selon l'invention, notamment lorsqu'au moins une partie de la structure de renforcement de sommet est réalisée radialement à l'intérieur de la structure de carcasse, est avantageusement réalisé selon une technique de fabrication du type sur noyau dur ou forme rigide.

Avantageusement encore, dans le cas d'une structure radiale, les éléments de renforcement de la structure de renfort de type carcasse font avec la direction circonférentielle un angle compris entre 65° et 90°.

Une réalisation avantageuse de l'invention prévoit encore que la structure de renfort de type carcasse est constituée de deux demi couches s'étendant par exemple des épaules aux bourrelets. Selon la nature, la quantité et la disposition des éléments de renforcement de sommet, l'invention prévoit effectivement la suppression de la structure de carcasse dans au moins une partie de la zone du pneumatique se trouvant sous la bande de roulement. La réalisation d'une telle structure de carcasse peut être faite selon l'enseignement du document EP-A-0 844 106.

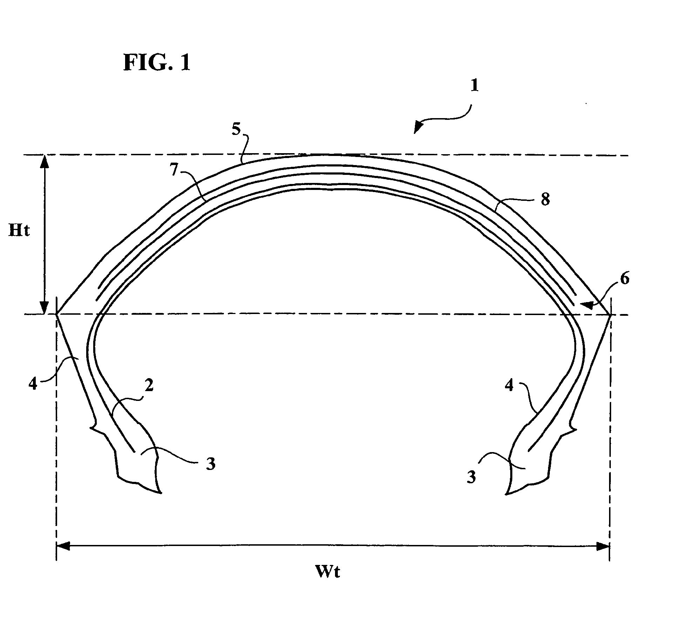

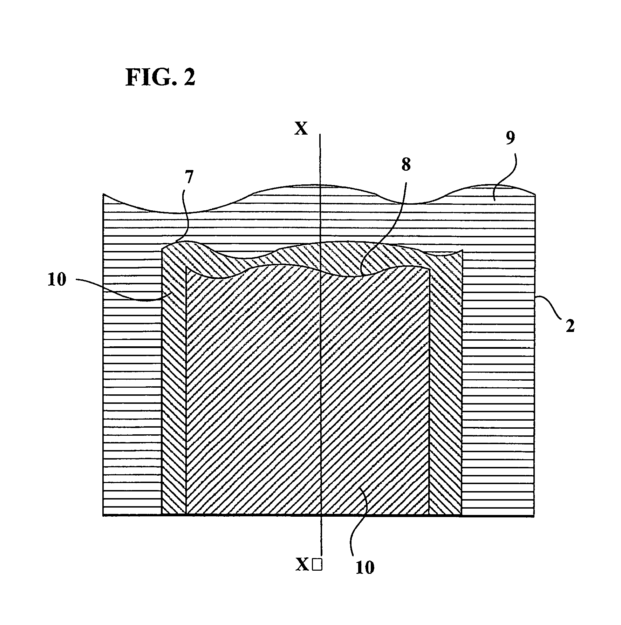

D'autres détails et caractéristiques avantageux de l'invention ressortiront ci-après de la description des exemples de réalisation de l'invention en référence aux figures 1 et 2 qui représentent :
- figure 1, une vue méridienne d'un schéma d'un pneumatique selon l'invention,
- figure2, une vue en plan et écorché de l'armature du pneumatique représenté sur la figure 1,
- figure 3, une vue schématique en coupe d'un câble bi-module.
Les figures ne sont pas représentées à l'échelle pour en simplifier la compréhension.

La figure 1 représente un pneumatique 1 comprenant une armature de carcasse constituée d'une couche 2 comprenant des éléments de renforcement de type textile. La couche 2 est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

Ladite couche de carcasse 2 est ancrée de chaque côté du pneumatique 1 dans un bourrelet 3 dont la base est destinée à être montée sur un siège de jante. Chaque bourrelet 3 est prolongé radialement vers l'extérieur par un flanc 4, ledit flanc 4 rejoignant radialement vers l'extérieur la bande de roulement 5. Le pneumatique 1 ainsi constitué présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique. La valeur de courbure sera avantageusement comprise entre 0.25 et 0.5 pour un pneumatique destiné à être monté à l'avant d'une motocyclette et elle sera avantageusement comprise entre 0.2 et 0.5 pour un pneumatique destiné à être monté à l'arrière.

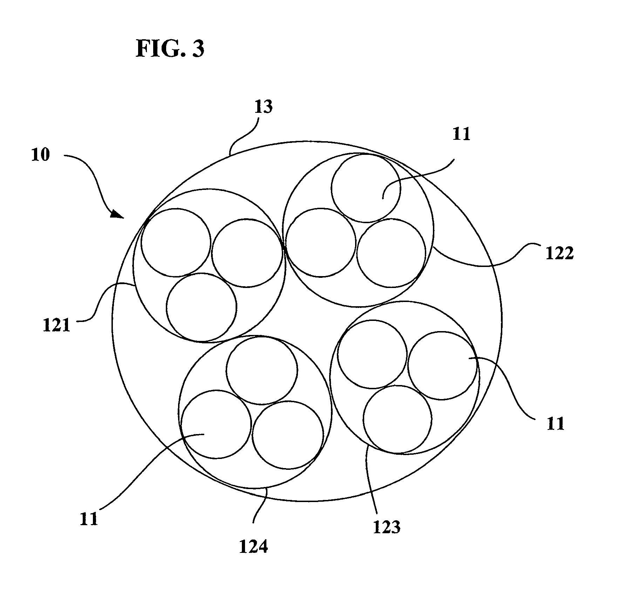

Le pneumatique 1 comporte encore une armature de sommet 6 qui peut selon le cas être constituée d'au moins deux couches de travail comportant des éléments de renforcement parallèles entre eux dans une même couche et croisés d'une couche à la suivante et éventuellement d'une couche d'éléments de renforcement circonférentiels. Conformément à l'invention les éléments de renforcement des couches de travail sont des câbles métalliques et dans le cas présent des câbles bi-module de type 12.15, dont la construction est 4x3x0.15 (S/S 3.1/4.6) ; ils sont représentés sur la figure 3. Dans le cas de l'exemple représenté sur les figures, l'armature de sommet est constituée de deux couches 7, 8 de travail comportant des câbles parallèles entre eux dans une même couche et croisés d'une couche à la suivante

La figure 2 représente une vue schématique en écorché de l'architecture du pneumatique 1, sur laquelle la direction circonférentielle est représentée par la ligne XX'. L'armature de carcasse, constituée d'une couche 2 d'éléments de renforcement textiles 9 faisant un angle de 90° avec la direction circonférentielle, est radialement recouverte par deux couches 7, 8 de câbles 10, tels que ceux illustrés sur la figure 3, parallèles entre eux dans chaque couche 7, 8 et croisés d'une couche à l'autre pour former entre eux des angles d'environ 40°.

La figure 3 illustre un schéma d'une coupe d'un tel câble 10. Le câble 10 utilisé selon l'invention est un câble à torons de formule 12.15, c'est-à-dire constitué de 12 fils élémentaires de diamètre égal à 15/100 mm ; le câble 10 répond à la formule 4x3x0.15 et comporte 4 torons tordus ensembles chacun constitué de 3 fils 11 enroulés de diamètre égal à 15/100 mm inscrits dans des cercles 121, 122, 123, 124 schématisant l'espace occupé par chacun des torons. La figure 3 illustre encore l'enroulement des 4 torons inscrits dans un cercle 13 schématisant l'espace occupé par le câble formé des 12 fils. Les fils 11 sont en acier.

Le pneumatique 1 est avantageusement réalisé selon une technique sur noyau dur, lesdits câbles étant mis en place, comme évoqué précédemment, selon la technique décrite dans le brevet EP 0 248 301. Une technique de fabrication sur noyau dur permet de maintenir le positionnement des câbles jusqu'à la fin de la fabrication du pneumatique et en outre, lorsqu'elle est associée à des pressions élevées lors de l'étape de cuisson, elle permet d'assurer une pénétration satisfaisante de la gomme au sein des câbles.

Des essais ont été effectués avec des pneumatiques ainsi réalisés. Ces essais ont consisté en des roulages sur des machines de tests et ont été comparés à des essais réalisés dans les mêmes conditions avec d'autres pneumatiques de mêmes dimensions ; il s'agit de pneumatiques 120/70 ZR 17.

Une première catégorie de pneumatiques dite de référence correspond à des pneumatiques réalisés de manière usuelle, c'est-à-dire avec des éléments de renforcement des nappes de travail en aramide. D'autres pneumatiques testés ont été réalisés avec des éléments de renforcement des nappes de travail en métal, lesdits éléments de renforcement n'étant pas des câbles "bi-module" mais des câbles de formule 4x23.

Les conditions de tests ont été les mêmes pour tous les pneumatiques ; ils étaient gonflés à 2.5 bar et soumis à une charge standard d'un pneumatique avant. Durant le cycle de roulage les pneumatiques se voient imposés des cycles de dérive.

Les résultats des pneumatiques de référence montrent après un roulage correspondant à au moins deux fois le kilométrage moyen d'usure de ce type de pneumatique, un état des éléments de renforcement des nappes de travail considéré comme acceptable.

Les résultats des pneumatiques selon l'invention montrent, après le même roulage, un état des câbles des nappes de travail comparable à celui des pneumatiques de référence et donc acceptable.

Les résultats des pneumatiques comportant des câbles métalliques 4x23 dans les nappes de travail montrent qu'à la moitié du kilométrage des roulages précédents, les câbles des nappes de travail sont endommagés, les pneumatiques étant considérés comme non utilisables.

Ces essais ont donc montré que la présence de câbles métalliques de type bi-module parfaitement imprégnés de gomme permet de faire des roulages sans nuire à l'endurance des pneumatiques.

## Revendications

1. Pneumatique (1) pour un véhicule motorisé à deux roues, tel qu'une motocyclette, comportant au moins une structure de renfort de type carcasse (2), formée d'éléments de renforcement (9), ancrée de chaque côté du pneumatique à un bourrelet (3) dont la base est destinée à être montée sur un siège de jante, chaque bourrelet se prolongeant radialement vers l'extérieur par un flanc (4), les flancs rejoignant radialement vers l'extérieur une bande de roulement (5), et comportant sous la bande de roulement une structure de renforcement de sommet (6) constituée d'au moins une couche (7,8) d'éléments de renforcement (10), lesdits éléments de renforcement étant des câbles métalliques présentant une courbe contrainte de traction en fonction de l'allongement relatif ayant des faibles pentes pour les faibles allongements et une pente sensiblement constante et forte pour les allongements supérieurs, **caractérisé en ce que** lesdits éléments de renforcement font un angle avec la direction circonférentielle compris entre 10 et 90°

2. Pneumatique selon la revendication 1, **caractérisé en ce que** les câbles métalliques, faisant un angle avec la direction circonférentielle compris entre 10 et 90°, présentent une aptitude à la pénétration comprise entre 80 et 100%.

3. Pneumatique selon l'une des revendications précédentes, comportant sous la bande de roulement (5) une structure de renforcement de sommet (6) **caractérisé en ce que** la structure de renforcement de sommet comporte au moins deux couches (7,8) d'éléments de renforcement et **en ce que** d'une couche à la suivante les éléments de renforcement forment entre eux des angles compris entre 20 et 160°.

4. Pneumatique selon l'une des revendications 1 à 3, **caractérisé en ce que** les angles formés par les câbles métalliques (10) avec la direction longitudinale sont variables selon la direction transversale et **en ce que** lesdits angles sont supérieurs sur les bords axialement extérieurs des couches d'éléments de renforcement par rapport aux angles desdits câbles métalliques mesurés au niveau du plan équatorial du pneumatique.

5. Pneumatique selon l'une des revendications précédentes, **caractérisé en ce que** la structure de renforcement de sommet comporte au moins une couche d'éléments de renforcement circonférentiels.

6. Pneumatique selon la revendication 5, **caractérisé en ce que** les éléments de renforcement de la couche d'éléments de renforcement circonférentiels présentent un module d'élasticité supérieur à 6000 N/mm².

7. Pneumatique selon la revendication 5 ou 6, **caractérisé en ce que** les éléments de renforcement de la couche d'éléments de renforcement circonférentiels sont métalliques et/ou textiles et/ou en verre.

8. Pneumatique selon l'une des revendications 5 à 7, **caractérisé en ce que** la couche d'éléments de renforcement circonférentiels est positionnée au moins partiellement radialement à l'extérieur d'une couche d'éléments de renforcement faisant un angle avec la direction circonférentielle compris entre 10 et 90°.

9. Pneumatique selon l'une des revendications 5 à 8, **caractérisé en ce que** la couche d'éléments de renforcement circonférentiels est positionnée au moins partiellement radialement à l'intérieur d'une couche (7,8) d'éléments de renforcement faisant un angle avec la direction circonférentielle compris entre 10 et 90° radialement intérieure.

10. Pneumatique selon l'une des revendications précédentes, **caractérisé en ce qu'**au moins une couche d'éléments de renforcement est positionnée au moins partiellement radialement à l'intérieur de la structure de renfort de type carcasse.

11. Pneumatique selon l'une des revendications précédentes, **caractérisé en ce que** les éléments de renforcement de la structure de renfort de type carcasse font avec la direction circonférentielle un angle compris entre 65° et 90°.

12. Pneumatique selon l'une des revendications précédentes, **caractérisé en ce que** la structure de renfort de type carcasse est réalisée en deux demi-couches s'étendant des épaules aux bourrelets.

## Claims

1. Tire (1) for a motorized two-wheeled vehicle such as a motorcycle, comprising at least one reinforcing structure of the carcass type (2), formed of reinforcing elements (9), anchored on each side of the tire into a bead (3) the base of which is intended to be mounted on a rim seat, each bead extending radially outwards in the form of a sidewall (4), the sidewalls radially towards the outside meeting a tread (5), and comprising, under the tread, a crown reinforcing structure (6) consisting of at least one layer (7,8) of reinforcing elements (10), the said reinforcing elements being metal cords of which the curve of tensile stress as a function of relative elongation exhibits shallow gradients for small elongations and a substantially constant and steep gradient for greater elongations, **characterized in that** the said reinforcing elements make an angle of between 10 and 90° with respect to the circumferential direction.

2. Tire according to Claim 1, **characterized in that** the metal cords that make an angle of between 10 and 90° with respect to the circumferential direction have a penetration ability of between 80 and 100%.

3. Tire according to one of the preceding claims, comprising, under the tread (5), a crown reinforcing structure (6), **characterized in that** the crown reinforcing structure comprises at least two layers (7,8) of reinforcing elements and **in that**, from one layer to the next, the reinforcing elements make angles of between 20 and 160° with one another.

4. Tire according to one of Claims 1 to 3, **characterized in that** the angles formed by the metal cords (10) with respect to the longitudinal direction can vary in the transverse direction and **in that** the said angles are greater on the axially outer edges of the layers of reinforcing elements compared to the angles of the said metal cords measured on the equatorial plane of the tire.

5. Tire according to one of the preceding claims, **characterized in that** the crown reinforcing structure comprises at least one layer of circumferential reinforcing elements.

6. Tire according to Claim 5, **characterized in that** the reinforcing elements in the layer of circumferential reinforcing elements have an elastic modulus in excess of 6000 N/mm².

7. Tire according to Claim 5 or 6, **characterized in that** the reinforcing elements in the layer of circumferential reinforcing elements are made of metal and/or textile and/or glass.

8. Tire according to one of Claims 5 to 7, **characterized in that** the layer of circumferential reinforcing elements is positioned at least partially radially on the outside of a layer of reinforcing elements that make an angle of between 10 and 90° with respect to the circumferential direction.

9. Tire according to one of Claims 5 to 8, **characterized in that** the layer of circumferential reinforcing elements is positioned at least partially radially on the inside of a layer (7,8) of reinforcing elements that make an angle of between 10 and 90° with respect to the circumferential direction radially on the inside.

10. Tire according to one of the preceding claims, **characterized in that** at least one layer of reinforcing elements is positioned at least partially radially on the inside of the carcass-type reinforcing structure.

11. Tire according to one of the preceding claims, **characterized in that** the reinforcing elements of the carcass-type reinforcing structure make an angle of between 65° and 90° with respect to the circumferential direction.

12. Tire according to one of the preceding claims, **characterized in that** the carcass-type reinforcing structure is made in two half-layers running from the shoulders to the beads.

## Patentansprüche

1. Reifen (1) für ein zweirädriges Fahrzeug wie z.B. ein Kraftrad, umfassend mindestens eine Verstärkungsstruktur vom Typ Karkasse (2), die aus Verstärkungselementen (9) geformt ist, die auf jeder Seite des Reifens an einem Wulst (3) verankert sind, dessen Basis dazu bestimmt ist, auf einen Felgensitz montiert zu werden, wobei sich jeder Wulst durch eine Seitenwand (4) radial nach außen hin verlängert, die Seitenwände radial nach außen mit einer Lauffläche (5) verbunden sind, und umfassend eine Scheitelverstärkungsstruktur (6) unterhalb der Lauffläche, die aus mindestens einer Schicht (7, 8) Verstärkungselemente (10) besteht, wobei diese Verstärkungselemente Stahlseile sind, die eine Zugspannungskurve abhängig von der relativen Dehnung haben, die bei kleinen Dehnungen geringe Steigungen und bei den größeren Dehnungen eine im Wesentlichen konstante und starke Steigung aufweist, **dadurch gekennzeichnet, dass** diese Verstärkungselemente einen Winkel zwischen 10° und 90° zur Umfangsrichtung bilden.

2. Reifen nach Anspruch 1, **dadurch gekennzeichnet, dass** die Stahlseile, die einen Winkel zwischen 10° und 90° zur Umfangsrichtung bilden, eine Durchdringungsfähigkeit zwischen 80 und 100 % aufweisen.

3. Reifen nach einem der vorherigen Ansprüche, umfassend eine Scheitelverstärkungsstruktur (6) unterhalb der Lauffläche (5), **dadurch gekennzeichnet, dass** die Scheitelverstärkungsstruktur mindestens zwei Schichten (7, 8) Verstärkungselemente umfasst und dass die Verstärkungselemente zueinander von einer Schicht zur nächsten Winkel zwischen 20° und 160° bilden.

4. Reifen nach einem der Ansprüche 1 bis 3, **dadurch gekennzeichnet, dass** die Winkel, die von den Stahlseilen (10) zur Längsrichtung gebildet werden, je nach Querrichtung variabel sind, und dass diese Winkel an den axial äußeren Rändern der Verstärkungselementschichten größer sind als die Winkel dieser Stahlseile, die auf der Äquatorebene des Reifens gemessen werden.

5. Reifen nach einem der vorherigen Ansprüche, **dadurch gekennzeichnet, dass** die Scheitelverstärkungsstruktur mindestens eine Schicht Umfangsverstärkungselemente umfasst.

6. Reifen nach Anspruch 5, **dadurch gekennzeichnet, dass** die Verstärkungselemente der Schicht Umfangsverstärkungselemente ein Elastizitätsmodul größer als 6000 N/mm² hat.

7. Reifen nach Anspruch 5 oder 6, **dadurch gekennzeichnet, dass** die Verstärkungselemente der Schicht Umfangsverstärkungselemente metallisch und/oder textil und/oder aus Glas sind.

8. Reifen nach einem der Ansprüche 5 bis 7, **dadurch gekennzeichnet, dass** die Schicht Umfangsverstärkungselemente mindestens teilweise radial außerhalb einer Schicht Verstärkungsselemente liegt, die zur Umfangsrichtung einen Winkel zwischen 10° und 90° bildet.

9. Reifen nach einem der Ansprüche 5 bis 8, **dadurch gekennzeichnet, dass** die Schicht Umfangsverstärkungselemente mindestens teilweise radial innerhalb einer Schicht (7, 8) Verstärkungselemente liegt, die zur Umfangsrichtung einen radial inneren Winkel zwischen 10° und 90° bildet.

10. Reifen nach einem der vorherigen Ansprüche, **dadurch gekennzeichnet, dass** mindestens eine Schicht Verstärkungselemente mindestens teilweise radial innerhalb der Verstärkungsstruktur vom Typ Karkasse angeordnet ist.

11. Reifen nach einem der vorherigen Ansprüche, **dadurch gekennzeichnet, dass** die Verstärkungselemente der Verstärkungsstruktur vom Typ Karkasse zur Umfangsrichtung einen Winkel zwischen 65° und 90° bilden.

12. Reifen nach einem der vorherigen Ansprüche, **dadurch gekennzeichnet, dass** die Verstärkungsstruktur vom Typ Karkasse aus zwei Halbschichten besteht, 1 die von den Reifenschultern zu den Wülsten verlaufen.
